# EUROPÄISCHE PATENTANMELDUNG

(11) **EP 1 878 605 A2**
(43) Veröffentlichungstag der Anmeldung: **16.01.2008**
(21) Anmeldenummer: 07013231.1
(22) Anmeldetag: 06.07.2007
(51) Int. Cl.: B60K 37/00

(54) **Kraftfahrzeug mit einem head-up-display**

(30) Priorität: 14.07.2006 DE 102006032770
(71) Anmelder: GM Global Technology Operations, Inc., Detroit, MI 48265-3000 (US)
(72) Erfinder: Bald, Heiko, 64397 Modautal (DE); Böhme, Aiko, 55218 Ingelheim (DE)
(74) Vertreter: Daniel, Ulrich W.P.

(57) **Zusammenfassung**

Ein Kraftfahrzeug verfügt über ein Head-Up-Display an einer Windschutzscheibe (1). Zur Erhöhung der Verkehrssicherheit ist mit dem Head-Up-Display ein Bremsweg des Kraftfahrzeugs darstellbar.

## Beschreibung

Die Erfindung bezieht sich auf ein Kraftfahrzeug mit einem Head-Up-Display an einer Windschutzscheibe.

Besonders bei hochwertigen Kraftfahrzeugen ist es bekannt, verschiedene Informationen, u.a. bezüglich der momentanen Fahrtgeschwindigkeit, einer Drehzahl des Motors oder Hinweise eines Navigationssystems, mit Hilfe eines an sich bekannten Head-Up-Displays an der Windschutzscheibe des Kraftfahrzeugs im unmittelbaren Sichtfeld des Fahrers zu projizieren, so dass dieser seinen Blick zur Überwachung von verschiedenen Zustandsgrößen nicht von dem vorausliegenden Fahrbahnabschnitt, beispielsweise zu einem Tachometer hin, abwenden muss. Vielmehr kann er während der normalen Fahrt z.B. die Fahrzeuggeschwindigkeit praktisch unbewusst über die Projektion des Head-Up-Displays wahrnehmen.

Die DE 25 12 222 A1 beschreibt eine Abstandswarneinrichtung für Kraftfahrzeuge, wobei ein geschwindigkeitsabhängiger Mindestabstand zu einem vorausfahrenden Kraftfahrzeug über ein weiteres Anzeigeinstrument im Armaturenbrett dargestellt werden kann. Vergleichbare Einrichtungen zur Berechnung und Darstellung eines Bremswegs, der geschwindigkeitsabhängig ist, sind aus den Druckschriften DE 41 17 534 A1, DE 38 38 977 A1 und DE 2 241 427 A1 bekannt. Diese Einrichtungen sind insofern nachteilig, als zur Darstellung eines Bremswegs stets ein zusätzliches Anzeigemittel im Armaturenbrett des Kraftfahrzeugs notwendig ist, was die Zahl der vom Fahrer zu überwachenden Parameter erhöht und somit der Fahrer in unerwünschter Weise vom Verkehrsgeschehen abgelenkt sein kann.

Es ist Aufgabe der Erfindung, ein Kraftfahrzeug der eingangs genannten Art zu schaffen, dessen Verkehrssicherheit in einfacher Weise erhöht ist.

Erfindungsgemäß wird die Aufgabe dadurch gelöst, dass mit dem Head-Up-Display ein Bremsweg des Kraftfahrzeugs darstellbar ist.

Bei einem derart ausgestalteten Kraftfahrzeug kann neben an sich beliebigen Größen, wie u.a. die Fahrzeuggeschwindigkeit oder Informationen des Navigationssystems über eine einzuschlagende Fahrtrichtung, auch der momentane Bremsweg des Kraftfahrzeugs dargestellt werden. Dieser Bremsweg kann beispielsweise von einem Steuergerät des Kraftfahrzeugs in Abhängigkeit der aktuellen Fahrzeuggeschwindigkeit und der bekannten Verzögerungsleistungen der Bremsanlage ermittelt und dementsprechend angezeigt werden. Es ist im Rahmen der Erfindung mit umfasst, einen solchen Bremsweg als absolute Größe in Metern und Zentimetern auf die Windschutzscheibe mittels des Head-Up-Displays zu projizieren. Bevorzugt erfolgt die Darstellung jedoch wie im Folgenden beschrieben.

Selbstverständlich wird die Leuchtstärke des Head-Up-Displays an die Umgebungshelligkeit, z.B. bei Dunkelheit oder einer Tunnelfahrt, selbsttätig angepasst, um eine Blendung des Fahrers zu vermeiden.

Der Vorteil der Erfindung besteht darin, dass bei einem bereits im Kraftfahrzeug vorhandenen Head-Up-Display praktisch kein zusätzlicher Aufwand erforderlich ist, um den Bremsweg dem Fahrer anzuzeigen, da die entsprechenden Messgrößen bzw. Signale bereits im Steuergerät vorliegen und dieses in einfacher Weise hard- und/oder softwaremäßig derart ausgestaltet werden kann, dass der geschwindigkeitsabhängige Bremsweg dem Fahrer projiziert werden kann.

Um dem Fahrer die Länge des Bremswegs unmittelbar zu verdeutlichen, wird derjenige fiktive Punkt, an dem das Kraftfahrzeug aufgrund des eingeleiteten Bremsvorgangs zum Stillstand kommen würde, im Head-Up-Display mit einem einprojizierten Querbalken visualisiert. Vorzugsweise wird hierfür eine Signalfarbe, wie rot oder orange, gewählt. Aufgrund dieses Querbalkens wird der Fahrer dazu veranlasst, den Sicherheitsabstand zu einem vorausfahrenden Verkehrsteilnehmer einzuhalten, da er bestrebt sein wird, diesen projizierten Querbalken stets in Fahrtrichtung gesehen hinter bzw. unter dem realen Bild des vorausfahrenden Verkehrsteilnehmers zu halten.

Vorzugsweise wird der aktuelle Bremsweg nicht nur bei einem tatsächlichen Bremsvorgang, d.h. wenn das Bremspedal gedrückt wird, angezeigt, sondern dauernd während des ganzen Fahrtbetriebs. Somit wird dem Fahrer auch unmittelbar mitgeteilt, ob er beispielsweise auf einen vorausfahrenden Verkehrsteilnehmer zu dicht aufgefahren ist. Es versteht sich, dass bei einer solchen dauernden Anzeige auch die Reaktionszeit des Fahrers, aus Sicherheitsgründen mindestens eine Sekunde, bei der Anzeige des Bremswegs berücksichtigt wird. Dies ist notwendig, um die zeitliche Verzögerung bis zur Einleitung eines Bremsvorgangs auszugleichen, falls beispielsweise der vorausfahrende Verkehrsteilnehmer eine unerwartet Vollbremsung einleitet.

In einer Ausgestaltung wird bei der Anzeige des verbleibenden Bremsweges auch die momentane Bremskraft bzw. die Stärke des Bremsvorgangs berücksichtigt. Wie es in der Kraftfahrzeugtechnik bekannt ist, kann ein Bremsvorgang, insbesondere mit einem ABS-System, als Vollbremsung erfolgen, d.h. das Bremspedal wird mit aller Kraft durchgedrückt, oder das Bremspedal wird nur sanft gedrückt, so dass das Kraftfahrzeug nur eine geringere Verzögerung erfährt. Wird diese Bremskraft bei der Anzeige des Bremswegs berücksichtigt, kann der Fahrer unterbewusst dazu veranlasst werden, eine stärkere Bremsung vorzunehmen, um nicht auf ein anderes Kraftfahrzeug aufzufahren.

Weiterhin können bei der Anzeige des Bremswegs verschiedene Signale oder Informationen, u.a. über einen Zustand der Fahrbahn und/oder über die momentan herrschenden Witterungsverhältnisse, berücksichtigt werden. Die entsprechenden Sensoren sind üblicherweise in Kraftfahrzeugen vorhanden. Beispielsweise kann mit einem Regensensor ermittelt werden, ob die Fahrbahn vom Regen nass ist, wodurch sich der Bremsweg verlängert. Auch bei tiefen Temperaturen treten andere Reibwerte der Reifen auf, was die Bremswege ebenfalls verändern.

Die Genauigkeit der Anzeige kann verbessert werden, wenn eine an sich bekannte Vorrichtung zur Ermittlung der Kopf- oder Augenposition des Fahrers einbezogen wird. So kann die Position des Querbalkens individuell angepasst werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

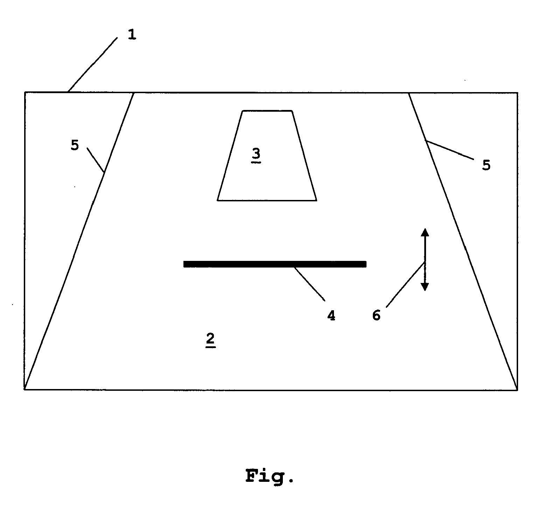

Die Erfindung wird im Folgenden anhand eines Ausführungsbeispiels unter Bezugnahme auf die zugehörige Zeichnung näher erläutert. Die einzige Fig. der Zeichnung zeigt einen Blick durch eine Windschutzscheibe eines erfindungsgemäßen Kraftfahrzeugs.

Die schräg nach oben zusammenlaufenden Linien 5 innerhalb der schematisch wiedergegebenen Windschutzscheibe 1 stellen eine von dem Kraftfahrzeug befahrene Fahrbahn 2 dar. Durch die Windschutzscheibe 1 hindurch kann ein Fahrer des Kraftfahrzeugs ein mit einem Trapez perspektivisch veranschaulichtes vorausfahrendes anderes Kraftfahrzeug 3 wahrnehmen.

Das Kraftfahrzeug verfügt über ein an sich bekanntes Head-Up-Display, mit dem verschiedene Informationen, wie unter anderem die momentane Fahrzeuggeschwindigkeit, in die Windschutzscheibe 1 projiziert werden können, wodurch der Fahrer zur Erfassung dieser Informationen nicht seinen Blick vom umgebenden Verkehrsgeschehen abwenden muss. Zusätzlich wird mit dem Head-Up-Display ein Balken 4 in die Windschutzscheibe 1 projiziert, vorzugsweise in einer Signalfarbe, wie rot oder orange. Der Balken 4 verdeutlicht denjenigen Punkt beziehungsweise diejenige Entfernung auf der vorausliegenden Fahrbahn 2, an dem das Kraftfahrzeug aus der momentanen Fahrtgeschwindigkeit zum Stillstand kommen würde, wenn ein Bremsvorgang eingeleitet wird. Selbstverständlich kann hierbei auch eine Reaktionszeit des Fahrers berücksichtigt werden. Durch die Einblendung dieses Balkens 4 kann der Fahrer also unmittelbar feststellen, ob er einen ausreichenden Sicherheitsabstand zum vorausfahrenden Kraftfahrzeug 3 einhält oder nicht. Bewegt sich der Balken 4, wie durch den Doppelpfeil 6 angedeutet, nach oben, so dass er über oder auf dem realen Bild des Kraftfahrzeugs 3 liegt, dann ist der Sicherheitsabstand zu gering, da beim Einleiten eines Bremsvorgangs der Abstand zum vorausfahrenden Kraftfahrzeug 3 nicht mehr ausreicht.

Bei der Projektion des Balkens 4 zur Wiedergabe des Haltepunkts können auch Informationen über den Fahrbahnzustand, Witterungseinflüsse sowie über die Stärke des Bremsvorgangs berücksichtigt werden. Somit wird der Fahrer dazu veranlasst, einen Bremsvorgang mit größtmöglicher Bremskraft auszuführen, da dadurch der Abstand zwischen dem Balken 4 und dem vorausfahrenden und gegebenenfalls ebenfalls bremsenden Kraftfahrzeugs 3 vergrößert wird und dieser nach unten wandert.

### Bezugszeichenliste

- 1.: Windschutzscheibe
- 2.: Fahrbahn
- 3.: Kraftfahrzeug
- 4.: Balken
- 5.: Linie
- 6.: Doppelpfeil

## Patentansprüche

1. Kraftfahrzeug mit einem Head-Up-Display im Bereich einer Windschutzscheibe (1), **dadurch gekennzeichnet, dass** mit dem Head-Up-Display ein Bremsweg des Kraftfahrzeugs darstellbar ist.

2. Kraftfahrzeug nach Anspruch 1, **dadurch gekennzeichnet, dass** der Bremsweg mit einem Querbalken (4) darstellbar ist.

3. Kraftfahrzeug nach Anspruch 1 oder 2, **dadurch gekennzeichnet, dass** der Bremsweg im laufenden Fahrtbetrieb darstellbar ist.

4. Kraftfahrzeug nach einem der Ansprüche 1 bis 3, **dadurch gekennzeichnet, dass** der Bremsweg in Abhängigkeit der Bremskraft darstellbar ist.

5. Kraftfahrzeug nach einem der Ansprüche 1 bis 4, **dadurch gekennzeichnet, dass** Signale über einen Zustand der Fahrbahn und/oder über Witterungsverhältnisse berücksichtigbar sind.
